Europäisches Patentamt

**European Patent Office**

Office européen des brevets

(11) Numéro de publication: **0 076 539**
**B1**

(12) **FASCICULE DE BREVET EUROPEEN**

(45) Date de publication du fascicule du brevet:
21.05.86

(51) Int. Cl.⁴: **C 08 F 297/02**

(21) Numéro de dépôt: **82201186.2**

(22) Date de dépôt: **23.09.82**

(54) **Copolymères séquencés dérivés de diènes conjugués ou d'hydrocarbures aromatiques vinyl-substitués et d'esters acryliques et procédé pour leur fabrication.**

(30) Priorité: **02.10.81 FR 8118756**

(43) Date de publication de la demande:
**13.04.83 Bulletin 83/15**

(45) Mention de la délivrance du brevet:
**21.05.86 Bulletin 86/21**

(84) Etats contractants désignés:
**AT BE CH DE FR GB IT LI LU NL SE**

(56) Documents cités:
**FR - A - 1 179 529**
**FR - A - 2 165 530**
**US - A - 3 567 798**

(73) Titulaire: **SOLVAY & Cie (Société Anonyme), Rue du Prince Albert, 33, B-1050 Bruxelles (BE)**

(72) Inventeur: **Teyssie, Philippe, Avenue du Bois de Rognac, 85, B-4121 Neuville (BE)**
Inventeur: **Jerôme, Robert, Rue des Sorbiers, 6, B-4040 Tilff (BE)**
Inventeur: **Ouhadi, Trazollah, Quai Gloesener, 5, B-4020 Liège (BE)**
Inventeur: **Fayt, Roger, Route du Condroz, 144, B-4121 Neuville (BE)**

## Description

L'invention concerne de nouveaux copolymères séquencés comprenant une première séquence formée d'unités monomériques dérivées de diènes conjugués ou d'hydrocarbures aromatiques vinylsubstitués autres que l'alpha-méthylstyrène et une deuxième séquence formée d'unités monomériques dérivées d'esters acryliques ainsi qu'un procédé pour la fabrication de ces nouveaux copolymères séquencés par polymérisation anionique.

Le principe de la fabrication de copolymères séquencés par polymérisation anionique est bien connu (W.H. Janes and D.C. Allport, Block Copolymers, 1973, Applied Science Publishers Ltd, pages 62 à 104).

On sait aussi que, du fait d'une réaction parasite entre la fonction ester et le carbanion qui termine la première séquence, les copolymères séquencés styrène-ester acrylique obtenus selon les procédés conventionnels ont une structure ramifiée et que la copolymérisation est fortement perturbée. Pour éviter cette réaction parasite, on a propose l'addition de diphenyl-1,1-éthylène à la fin de la polymerisation de la première sequence (Freyss, Leng et Rempp, Bulletin de la Société Chimique de France, 1964, vol. 31, pages 221 à 224). Cependant cet additif est coûteux et difficile à purifier.

L'invention a donc pour but de procurer des copolymères séquencés du type de ceux décrits ci-avant obtenus sans qu'il faille faire intervenir un additif tel que le diphényl- 1,1 éthylène, en évitant la réaction parasite mentionnée ci-avant et donc la formation d'une structure ramifiée.

L'invention concerne des copolymères séquencés comprenant une première séquence formée d'unites monomériques dérivées de diènes conjugués ou d'hydrocarbures aromatiques vinyl substitués autres que l'alpha-méthylstyrène et une deuxième séquence formée d'unités monomériques dérivées d'esters acryliques, ces deux séquences étant séparées par une séquence intermédiaire formée d'unités monomériques dérivées de l'alpha-méthylstyrène, cette séquence intermédiaire ayant un poids moléculaire inférieur à 10 000.

Les copolymères séquencés selon l'invention peuvent ne comprendre que les séquences précitées ou comprendre des séquences supplémentaires dans la mesure où l'addition de ces séquences est possible.

Les diènes conjugués dont peuvent être dérivées les unités monomériques de la première séquence peuvent être quelconques. En général, ce sont des diènes conjugués substitués ou non, contenant de 4 à 12 atomes de carbone par molécule, les diènes conjugués non substitués contenant de 4 à 8 atomes de carbone par molécule étant préférés. Des exemples de pareils diènes sont le butadiène 1-3, l'isoprène, le 2,3-diméthyl-1,3 butadiène, le 1,3-pentadiène (pipèrylène), le 2-méthyl-3 éthyl-1,3 butadiéne, le 3-méthyl-1,3-pentadiène, le 2-éthyl-1,3 pentadiène, le 1,3-hexadiène, le 2-méthyl-1,3-hexadiène, le 1,3-heptadiène, le 3-méthyl-1,3-heptadiène, le 1,3-octadiène, le 3,4-diméthyl-1,3-hexadiéne, le 2-phényl-1,3 butadiène. L'isoprène et le 1-3 butadiène sont particulièrement préférés.

Les hydrocarbures aromatiques vinylsubstitués dont peuvent être dérivées les unités monomériques de la première séquence peuvent également être quelconques. En général, ce sont des hydrocarbures aromatiques comprenant un ou deux noyaux benzéniques. Les hydrocarbures aromatiques contenant de 8 à 16 atomes de carbone par molécule sont préférés. Des exemples de pareils hydrocarbures sont le styrène, le 3-vinyltoluène, le 4-vinyltoluène, l'alpha-vinylnaphtalène, le 2-vinylnaphtalène. Le styrène est particuliérement préféré.

Les esters acryliques dont sont dérivées les unités monomériques de la deuxième séquence peuvent également être quelconques. En général, ce sont des esters acryliques de structure linéaire ou ramifiée, comprenant de 4 à 17 atomes de carbone par molécule et de préférence de 4 à 10 atomes de carbone par molécule. On peut citer comme exemples de pareils esters le méthacrylate de méthyle, le méthacrylate d'éthyle, l'acrylate de butyle, l'acrylate d'éthylhexyle, l'acrylate de méthyle, l'acrylate d'éthyle, l'acrylate d'isopropyle, le méthacrylate de butyle et le méthacrylate d'hexyle. Le méthacrylate de méthyle est particulièrement préféré.

Les longueurs des chaînes de la première et de la deuxième séquences ne sont pas critiques. En général, le poids moléculaire moyen de la première séquence est compris entre 20 000 et 1 000 000 de préférence entre 10 000 et 500 000 et plus particulièrement entre 25 000 et 200 000. Celui de la deuxième séquence est compris en général 200 et 1 000 000, de préférence entre 5 000 et 500 000 et plus particulièrement entre 25 000 et 200 000.

La longueur de chaîne de la séquence intermédiaire est telle que son poids moléculaire est inférieur à 10 000 et, de préférence, inférieur à 1000.

Les unités monomériques dans la première séquence comme dans la deuxième séquence, peuvent être différentes mais sont de préférence identiques.

Les copolymères séquencés selon l'invention présentent en général une structure linéaire.

L'invention concerne aussi un procédé pour la fabrication des copolymères séquencés décrits ci-avant comportant trois étapes au cours desquelles on polymérise successivement par polymérisation anionique des diènes conjugués ou des hydrocarbures aromatiques vinylsubstitués autres que l'alpha-méthylstyrène, de l'alphaméthylstyrène, et des esters acryliques.

Les conditions de réalisation de la polymérisation anionique utilisables selon l'invention sont celles habituellement mises en oeuvre pour ce type de polymérisation.

L'initiateur peut être choisi parmi les initiateurs habituellement utilisés pour la polymérisation anionique. Ce sont en général des composés organométalliques dérivés de métaux alcalins dont les radicaux organiques sont des radicaux aryles, alkyles, cycloalkyles ou arylalkyles qui contiennent de 1 à 12, et de préférence de 4 à 10 atomes de carbone. Parmi ceux-ci, les composés organolithiens sont utilisés de préférence. Des exemples de tels imitiateurs sont le butyllithium, le lithium naphtalène, -l'éthyllithium l'hexyllithium, le styrènelithium et le cyclopentylelithium. L'emploi de lithiumalphaméthylstyrène est particulièrement préféré.

La proportion d'initiateur utilisé par rapport à la quantité de monoméres employée pour former la première séquence peut varier trés largement selon la nature de l'initateur et la nature des monomères. Habituellement on utilise de 0,1 à 100 millimoles d'initiateurs pour cent grammes de monomère.

Selon un mode de réalisation préféré du procédé selon l'invention dans lequel on met en oeuvre un composé organométallique alcalin dérivé d'alpha-méthylstyrène comme initiateur, celui-ci est synthétisé avant de commencer la polymérisation en ajoutant de l'alpha-méthylstyrène à un initiateur conventionnel, de préférence le butyllithium, en quantité au moins équimolaire. Ce mode de réalisation est particulièrement avantageux lorsque l'on met en oeuvre pour la fabrication de la première séquence des monomères dont la vitesse de polymérisation est beaucoup plus élevée que la vitesse de polymérisation de l'alphaméthylstyrène, comme c'est le cas, par exemple, pour le styrène, le butadiène et l'isoprène. Dans ces conditions, en effet, on peut mettre en oeuvre l'alphaméthylstyrène en excès molaire de façon à en conserver une certaine quartité à l'issue de la fabrication de la première séquence. Cet alpha-méthylstyrène en excès vient s'additionner en bout de chaîne de la première séquence de manière à former la séquence intermédiaire et il devient alors inutile d'en ajouter spécialement.

Dans le procédé selon l'invention, on utilise en général un solvant, de préférence polaire. Des exemples de solvant utilisables sont le tétrahydrofuranne, les éthers ccmme le dioxane, le diéthyléther, le diisopropyléther, le dibutyléther, ou le diméthyléther de l'éthyléne-glycol, le benzène, le xylène, le toluène ou le naphtalène, le tétrahydrofuranne étant particulièrement préféré. La quantité de solvant à mettre en oeuvre n'est pas critique.

Il est utile de procédér à l'élimination des impuretés nuisibles dans le solvant de polymérisation avant le démarrage de la polymérisation afin d'éviter toute désactivation des centres anioniques. Cette élimination peut se faire facilement en ajoutant un excès de l'initiateur au solvant avant d'introduire les monomères.

La température à laquelle la polymérisation est réalisée peut varier dans une large mesure et est choisie notamment en fonction de la nature des monomères, du solvant éventuel et de l'initiateur. En général, la température est comprise entre -100 et 50°C.

Généralement, il est désirable d'opérer sous des pressions suffisantes pour maintenir les monomères en phase liquide. La pression est par conséquent choisie en fonction des produits particuliers qu'on polymérise, du solvant utilisé et de la température. D'habitude, la polymérisation est effectuée à la pression autogène. On peut toutefois utiliser des pressions différentes de la pression autogène si on le désire.

La polymérisation peut être réalisée en continu ou en discontinu. Les monomères peuvent être ajoutés en une fois, en plusieurs fois ou en continu.

En général, on désactive le copolymère séquencé vivant à la fin de la polymérisation par un moyen classique comme l'addition d'alcool ou d'un acide carboxylique. On procède ensuite à une filtration afin de récupérer le polymère que l'on sèche ensuite à l'aide d'un appareil de séchage courant, de préférence opérant sous vide.

Le procédé de copolymérisation de l'invention peut être réalisé dans n'importe quel appareillage conçu à cet effet.

Les copolymères séquencés selon l'invention sont utilisables notamment pour la fabrication de colles, de revêtements et de fibres.

La présente invention est illustrée par les exemples suivants

**Exemple 1 :**

Dans un ballon en verre de cinq litres muni d'un robinet comportant une membrane en caoutchouc permettant l'introduction du solvant et des réactifs par seringue ou par capillaire, conditionné à la flamme sous vide et rempli d'azote, on introduit à température ordinaire 3 l d'une solution de tétrahydrofuranne contenant 5 ml d'alpha-méthylstyrène en utilisant de l'alphaméthylstyrène préalablement séché sur de l'hydrure de calcium, distillé avant d'être repassé sur du fluorenyllithium et redistillé juste avant l'emploi et du tétrahydrofuranne qui a été mis à reflux sur un complexe benzophénone-sodium et distillé. Les impuretés encore présentes dans la solution préparée sont détruites par addition goutte à goutte de sec-butyllithium em solution 0,6 M dans l'hexane jusqu'à ce qu'on obtienne une coloration rouge persistante.

On ajoute ensuite 3 ml de la solution de sec-butyllithium. On refroidit à -78°C par un bain acétone/dioxyde de carbone et on ajoute ensuite par capillaire dans le milieu réactionnel 110 ml de styrène pur, préalablement séché sur de l'hydrure de calcium et distillé, puis repassé sur fluorenyllithium et redistillé juste avant l'emploi. Pendant cette opération, le mélange réactionmel prend une coloration jaune orange ce qui prouve la formation de l'anion styrile puis elle reprend finalement une coloratiom rouge foncé caractéristique de l'anion méthylstyrile.

On laisse le mélange réactionnel sous agitation à -78°C pendant 90 min. Ensuite 110 ml de méthacrylate de méthyle pur et froid, préalablement séché sur de l'hydrure de calcium, distillé, repassé sur du triéthylaluminium et redistillé juste avant d'être employé sont versés lentement par le capillaire dans le ballon. On observe alors l'apparition d'une coloration jaune pâle.

Au bout de 90 minutes on désactive les anions par addition de 5 ml de méthanol, puis on précipite le copolymère à l'aide d'un large excès de méthanol.

Du copolymère séquencé linéaire styrène/alpha-méthylstyrène/ méthacrylate de méthyle est obtenu avec un rendement pratiquement égal à 100 % après filtration de la bouillie liquide obtenue et séchage sous vide à 40°C. Les mesures de chromatographie par perméation de gel indiquent une polydispersité faible et un poids moléculaire total voisin de 150 000.

**Exemple 2**

Dans un ballon en verre de cinq litres muni d'un robinet comportant une membrane en caoutchouc permettant l'introduction du solvant et des réactifs par seringue ou par capillaire, conditionné à la flamme sous vide et rempli d'azote, on introduit à température ordinaire 350 ml d'une solution de styrène à 0,3% en volume dans du benzène en utilisant du styrène préalablement séché sur de l'hydrure de calcium, distillé avant d'être repassé sur du fluorenyllithium et redistillé juste avant l'emploi et du benzène qui a été mis à reflux sur de l'hydrure de calcium et distillé. Les impuretés encore présentes dans la solution préparée sont détruites par addition goutte à goutte de sec-butyllithium en solution 0.6 M dans l'hexane jusqu'à ce qu'on obtienne une coloration rouge persistante.

On ajoute ensuite 1 ml de la solution de sec-butyllithium et on agite le milieu réactionnel pendant environ 15 min à température ordinaire. On refroidit alors à -10°C et on introduit dans le milieu réactionnel 90 ml d'isoprène pur, préalablement séché à basse température sur du n-butyllithium avant d'être distillé. Pendant cette opération, le mélange réactionnel prend une coloration jaune pâle caractéristique de l'anion isoprényle. On laisse se poursuivre sous agitation la polymérisation de la séquence isoprène pendant 12 h à 20°C.

On ajoute alors 1,5 ml d'alpha-méthylstyrène pur et 2 ml de styrène pur qui ont été préalablement séchés sur de l'hydrure de calcium et distillés puis repassés sur du fluorenyllithium et rédistillés juste avant d'être ajoutés dans le mélange réactionnel. Le mélange réactionnel est ensuite porté à 40°C pendant 30 minutes et prend une coloration rouge puis on ajoute 1,5 l de tétrahydrofuranne préablement mis à reflux sur un complexe benzophénone-sodium et distillé; le mélange réactionnel est alors refroidi à -78°C.

Une fois le mélange réactionnel refroidi à -78°C, 70 ml de méthacrylate de méthyle pur et froid, préalablement séché sur de l'hydrure de calcium, distillé, repassé sur du triéthylaluminium et redistillé juste avant d'être employé sont versés dans le ballon. On laisse le méthacrylate se polymériser pendant 2 h à -78°C.

Du copolymère séquencé linéaire isoprène/styrène/alpha-méthylstyrène/ méthacrylate de méthyle est obtenu avec un rendement pratiquement de 100% après filtration de la bouillie liquide obtenue et séchage sous vide à 40°C. Les mesures de chromatographie par perméation de gel indiquent une polydispersité faible et un poids moléculaire total voisin de 220 000.

**Revendications**

1 - Copolymères séquencés comprenant une première séquence formée d'unités monomériques dérivées d'un diène conjugué ou d'un hydrocarbure aromatique vinylsubstitué autre que l'alpha-méthylstyrène et une deuxième séquence formée d'unités monomériques dérivées d'un ester acrylique caractérisés en ce que la première et la seconde séquence sont séparées par une séquence intermédiaire formée d'unités monomériques dérivées de l'alpha-méthylstyrène de poids moléculaire inférieur à 10.000.

2 - Copolymères séquencés selon la revendication 1 caractérisés en ce qu'ils sont linéaires.

3 - Copolymères séquencés selon les revendications 1 ou 2 caractérisés en ce que la première séquence est formée d'unités monomériques dérivées du styrène.

4 - Copolymères séquencés selon les revendications 1 ou 2 caractérisés en ce que la première séquence est formée d'unités monomériques dérivées de l'isoprène.

5 - Copolymères séquencés selon les revendications 1 ou 2 caractérisés en ce que la première séquence est formée d'unités monomériques dérivées du butadiène-1,3.

6 - Copolymères séquencés selon l'une quelconque des revendications 1 à 5 caractérisés en ce que la deuxième séquence est formée d'unités monomériques dérivées du méthacrylate de méthyle.

7 - Procédé pour la fabrication de copolymères séquencés selon la revendication 1 caractérisé en ce qu'il comporte trois étapes au cours desquelles on polymérise successivement, par polymérisation anionique, des diènes conjugués ou des hydrocarbures aromatiques vinylsubstitués autres que l'alphaméthylstyrène, de l'alphaméthylstyrène et des esters acryliques.

8 - Procédé de fabrication selon la revendication 7 caractérisé en ce que le diène conjugué ou l'hydrocarbure aromatique vinylsubstitué autre que l'alpha-méthylstyrène présente une vitesse de polymérisation beaucoup plus élevée que celle de l'alpha-méthylstyrène.

9 - Procédé de fabrication selon les revendications 7 à 8 caractérisé en ce que on utilise comme initiateur lors de la première étape un composé alcalin dérivé de l'alpha-méthylstyrène.

10 - Procédé de fabrication selon la revendication 9 caractérisé en ce que le composé alcalin dérivé de l'alpha-méthylstyrène est synthétisé avant que la première étape ne soit commencée en ajoutant de l'alphaméthylstyrène à du butyllithium en quantité au moins équimolaire.

**Patentansprüche**

1. Blockcopolymere enthaltend eine erste Sequenz, die gebildet ist aus Monomer-Einheiten, die von einem konjugierten Dien oder einem Vinylsubstituierten aromatischen Kohlenwasserstoff, der von alpha-Methylstyrol verschieden ist, abstammen, und eine zweite Sequenz, die gebildet ist aus Monomer-Einheiten, die von einem Acrylsäureester abstammen, dadurch gekennzeichnet, daß die erste und die zweite Sequenz durch eine Zwischensequenz getrennt sind, die gebildet ist aus Monomer-Einheiten, die von alpha-Methylstyrol abstammen, mit einem Molekulargewicht unterhalb von 10.000.

2. Blockcopolymere nach Anspruch 1, dadurch gekennzeichnet, daß sie linear sind.

3. Blockcopolymere nach Anspruch 1 oder 2, dadurch gekennzeichnet, daß die erete Sequenz aus Monomer-Einheiten gebildet ist, die von Styrol abstammen.

4. Blockcopolymere nach Anspruch 1 oder 2, dadurch gekennzeichnet, daß die erste Sequenz aus Monomer-Einheiten gebildet ist, die von Isopren abstammen.

5. Blockcopolymere nach Anspruch 1 oder 2, dadurch gekennzeichnet, daß die erste Sequenz aus Monomer-Einheiten gebildet ist, die von 1,3-Butadien abstammen.

6. Blockcopolymere nach einem der Ansprüche 1 bis 5, dadurch gekennzeichnet, daß die zweite Sequenz aus Monomer-Einheiten gebildet ist, die von Methylmethacrylat abstammen.

7. Verfahren zur Herstellung von Blockcopolymeren nach Anspruch 1, dadurch gekennzeichnet, daß es drei Stufen aufweist, in deren Verlauf man nacheinander durch anionische Polymerisation konjugierte Diene oder aromatische Vinyl-substituierte Kohlenwasserstoffe, die von alpha- Methylstyrol verschieden sind, alpha-Methylstyrol und Acrylsäureester polymerisiert.

8. Verfahren zur Herstellung nach Anspruch 7, dadurch gekennzeichnet, daß das konjugierte Dien oder der Vinyl-substituierte aromatische Kohlenwasserstoff, der von alpha-Methystyrol verschieden ist, eine Polymerisationsgeschnwindigkeit aufweist, die viel höher ist, als die von alpha-Methylstyrol.

9. Verfahren zur Herstellung nach den Ansprüchen 7 bis 8, dadurch gekennzeichnet, daß man als Initiator zur Zeit der ersten Stufe eine alkalische Verbindung, die von alpha-Methylstyrol abstammt, verwendet.

10. Verfahren zur Herstellung nach Anspruch 9, dadurch gekennzeichnet, daß die alkalische Verbindung, die von alpha-Methylstyrol abstammt, vor dem Beginn der ersten Stufe synthetisiert wird, indem man alpha-Methylstyrol zu Butyllithium in mindestens äquimolarer Menge zugibt.

**Claims**

1. Block copolymers comprising a first block consisting of monomer units derived from a conjugated diene or a vinyl-substituted aromatic hydrocarbon other than alphamethylstyrene and a second block consisting of monomer units derived from an acrylic ester, characterized in that the first and the second block are separated by an intermediate block consisting of monomer units derived from alpha-methylstyrene of a molecular weight lower than 10,000.

2. Block copolymers according to Claim 1, characterized in that they are linear.

3. Block copolymers according to Claims 1 or 2, characterized in that the first block consists of monomer units derived from styrene.

4. Block copolymers according to Claims 1 or 2, characterized in that the first block consists of monomer units derived from isoprene.

5. Block copolymers according to Claims 1 or 2, characterized in that the first block consists of monomer units derived from 1,3-butadiene.

6. Block copolymers according to any one of Claims 1 to 5, characterized in that the second block consists of monomer units derived from methyl methacrylate.

7. Process for the manufacture of block copolymers according to Claim 1, characterized in that it comprises three steps during which conjugated dienes or vinyl-substituted aromatic hydrocarbons other than alpha-methylstyrene, alpha-methylstyrene and acrylic esters are polymerized sequentially by anionic polymerization.

8. Manufacturing process according to Claim 7, characterized in that the conjugated diene or the vinylsubstituted aromatic hydrocarbon other than alpha-methylstyrene has a rate of polymerization which is much higher than that of alpha-methylstyrene.

9. Manufacturing process according to Claims 7 to 8, characterized in that an alkali metal compound derived from alpha-methylstyrene is used as an initiator in the first step.

10. Manufacturing process according to Claim 9, characterized in that before the first step begins the alkali metal compound derived from alpha-methylstyrene is synthesized by adding alpha-methylstyrene to butyllithium in a quantity which is at least equimolar.